# EUROPÄISCHE PATENTSCHRIFT

(11) **EP 2 032 873 B1**
(45) Veröffentlichungstag und Bekanntmachung des Hinweises auf die Patenterteilung: **23.12.2009**
(21) Anmeldenummer: 07729710.9
(22) Anmeldetag: 31.05.2007
(51) Int. Cl.: F16G 13/16, B66C 13/12, H02G 11/00

(54) **VERFAHREN ZUR MONTAGE EINES ENERGIEFÜHRUNGSKETTENSYSTEMS**
METHOD FOR ASSEMBLING AN ENERGY-GUIDING CHAIN SYSTEM
PROCEDE DE MONTAGE D'UN SYSTEME DE CHAINE DE GUIDAGE D'ELEMENTS DE TRANSPORT D'ENERGIE

(30) Priorität: 09.06.2006 DE 102006026854
(43) Veröffentlichungstag der Anmeldung: 11.03.2009
(73) Patentinhaber: Conductix-Wampfler AG, 79576 Weil am Rhein-Märkt (DE)
(72) Erfinder: BURGER, Claus, 79585 Steinen (DE); OBERGFELL, Ralf, 79219 Staufen (DE); HALLAC, Ergün, 79539 Lörrach (DE); IBARTH, Michael, 94369 Rain (DE)
(74) Vertreter: Charrier, Rapp & Liebau
(86) Internationale Anmeldenummer: PCT/EP2007/055299
(87) Internationale Veröffentlichungsnummer: WO 2007/141178

(56) Entgegenhaltungen:
- WO-A-2004/005666
- WO-A1-00/63585
- DE-U1- 20 101 656
- GB-A- 1 000 021

## Beschreibung

Die Erfindung betrifft ein Verfahren zur Montage eines Energieführungskettensystems nach dem Oberbegriff des Anspruchs 1 und eine Vorrichtung zur Durchführung des Verfahrens.

Energieführungskettensysteme sind als solche bekannt. Sie finden bei der Übertragung von Energie und Steuersignalen zu einem beweglichen Verbraucher, wie beispielsweise bei einem Portalkran, Verwendung. Dabei sind insbesondere elektrische, aber auch hydraulische oder pneumatische Versorgungsleitungen sowie elektrische Steuerleitungen, die von einem ortsfesten Anschlußpunkt zu einem beweglichen, linear verfahrbaren Verbraucher wie dem Portal eines Krans führen, in einer kettenartigen Stützstruktur, nachfolgend Führungskette genannt, gehalten. Diese gewährleistet eine definierte und insbesondere reversible Bewegung der Leitungen, wenn die an dem Verbraucher angeschlossenen Enden der Leitungen bei der Bewegung des Verbrauchers von diesem mitgeschleppt werden. Sie gibt darüber hinaus bei einer Krümmung der Leitungen den minimalen Krümmungsradius vor und verhindert somit eine Knickung. Um ein seitliches Verrutschen bei der Bewegung zu verhindern, ist die Energieführungskette, d.h. die Führungskette mitsamt den in ihr gehaltenen Leitungen, in einem Führungskanal von im wesentlichen U-förmigem Querschnitt geführt. Je nach der Stellung des Verbrauchers in Bezug auf den ortsfesten Anschlußpunkt kann die Energieführungskette eine Schleife bilden und ein Teil von ihr auf einem anderen Teil liegen bzw. gleiten, weshalb der Führungskanal die doppelte Höhe der Energieführungskette aufweisen muß. Eine Energieführungskette und ein dazu passender Führungskanal bilden zusammen ein Energieführungskettensystem.

Üblicherweise werden Energieführungskettensysteme am Einsatzort aus ihren Komponenten zusammengebaut. Dabei wird der Führungskanal in mehreren Teilabschnitten angeliefert und diese werden mittels einer Vielzahl passender Halter aufeinanderfolgend an einer vorbereiteten Trägeranordnung, beispielsweise in Form mehrerer von einem Träger abragender Konsolen, befestigt. Anschließend wird die Energieführungskette, die üblicherweise auf einer Trommel aufgespult angeliefert wird, zu dem aufgebauten Führungskanal gebracht und in diesen eingezogen.

Da Energieführungskettensysteme häufig an exponierten und schlecht zugänglichen Stellen wie im oberen Bereich von Portalkränen angebracht werden müssen, sind die Montagearbeiten üblicherweise mit einem erheblichen apparativen, personellen und zeitlichen Aufwand verbunden. So werden nicht nur Hebezeuge von entsprechender Hubhöhe und Tragfähigkeit für das Verbringen der Komponenten zum Montageort benötigt, sondern wegen des erheblichen Gewichts einer Energieführungskette erfordert das Einziehen in den Führungskanal üblicherweise auch den Einsatz einer Seilwinde.

Das Personal muß in großer Höhe unter schwierigen Umgebungsbedingungen, insbesondere häufig bei ungünstigen Witterungsbedingungen arbeiten, und dabei mit schweren und unhandlichen Komponenten und Arbeitsgeräten hantieren, was Gefahren beinhaltet, entsprechende Sicherheitsvorkehrungen erfordert und die Arbeit zeitaufwendig macht. So muß beispielsweise beim Abspulen einer Energieführungskette von einer Trommel diese von einem Kran in Position zum Führungskanal gebracht und präzise gehalten werden, während mittels einer Seilwinde die Energieführungskette von der Trommel aus in den Kanal eingezogen wird. Bei einer langen Energieführungskette müssen unter Umständen mehrere Teilstücke von verschiedenen Trommeln abgespult und vor Ort im Führungskanal miteinander verbunden werden.

Mit dem Auf- und Abspulen einer Energieführungskette auf bzw. von einer Trommel ist stets eine Längsverschiebung zwischen der eigentlichen Führungskette und den in ihr gehaltenen Leitungen verbunden, die insbesondere beim Abspulen zu einer Beaufschlagung der Leitungen mit einer erheblichen Zugbelastung führen kann und sogar die Gefahr einer Beschädigung der Leitungen birgt. Die Ursache für die Längsverschiebung liegt im unterschiedlichen Krümmungsverhalten einer aus einzelnen Gliedern zusammengesetzten Führungskette gegenüber demjenigen einer kontinuierlich flexiblen Leitung, weshalb der Effekt nicht zu vermeiden ist.

Aus der DE 201 01 656 U1 ist eine Führungsrinne für Energieführungsketten bekannt, die eine zur Befestigung an einer im wesentlichen vertikalen Fläche geeignete Tragkonstruktion aufweist. In jener Schrift wird unter anderem eine Vormontage der Führungsrinne und der Energieführungskette vorgeschlagen. Es wird aber keine Aussage darüber getroffen, wie der Montageprozess im Falle einer solchen Vormontage von Systemkomponenten insgesamt ablaufen soll.

WO 2004/005666 offenbart einen Heberahmen für Komponenten einer Öl- oder Gasförderausrüstung, wie sie auf Bohr- bzw. Förderplattformen verwendet wird. Bei dem Rahmengestell handelt es sich um einen Transportschutzrahmen, welcher das Oberteil eines Transportrahmens bildet, zu dem ferner ein unteres Basisteil gehört. Am Einsatzort der Ausrüstung wird nur der Transportschutzrahmen entfernt, während der Rest des Transportrahmens , also offenbar das untere Basisteil , dort befestigt wird und eine Trägerstruktur für andere Komponenten der Ausrüstung bildet.

GB 1 000 021 A handelt es sich bei dem Rahmengestell insgesamt um einen festen Bestandteil eines Energieführungskettensystems, welcher zum dauerhaften Verbleib am Einsatzort desselben vorgesehen ist.

WO 00/63585 offenbart ein Verfahren zur Montage eines Energieführungskettensystems, das eine Energieführungskette mit mindestens einer in einer Führungskette angeordneten Energieversorgungsleitung sowie mit einem Führungskanal zur Führung der Bewegung der Energieführungskette im Betrieb aufweist, wobei zumindest ein jeweiliger Abschnitt der Energieführungskette abseits des Einsatzortes des Energieführungskettensystems vormontiert ist

Der Erfindung liegt daher die Aufgabe zugrunde, eine komplette Lösung zur Verringerung des Aufwandes und zur Steigerung der Arbeitsproduktivität bei der Montage eines Energieführungskettensystems anzugeben.

Diese Aufgabe wird erfindungsgemäß durch ein Verfahren zur Montage eines Energieführungskettensystems mit den Merkmalen des Anspruchs 1 sowie durch eine Vorrichtung zur Durchführung des Verfahrens mit den Merkmalen des Anspruchs 12 gelöst. Vorteilhafte Ausgestaltungen der Erfindung sind in den jeweiligen Unteransprüchen angegeben.

Erfindungsgemäß werden zumindest jeweilige Abschnitte einer Energieführungskette und ihres zugehörigen Führungskanals werksseitig vormontiert und bereits als gemeinsame Transporteinheit, bei der die fertige, d.h. anschlußbereite Energieführungskette in dem Führungskanal liegt, an den Einsatzort gebracht. Dort wird im Rahmen der Endmontage besagte Transporteinheit gemeinsam auf einer Trägeranordnung, welche zum Tragen des Energieführungskettensystems im Betrieb bestimmt ist, plaziert und der Abschnitt des Führungskanals an dieser befestigt. Bei der Bildung der gemeinsamen Transporteinheit wird der Abschnitt des Führungskanals zusammen mit dem darin abgelegten Abschnitt der Energieführungskette in ein Rahmengestell eingebracht, welches erst nach der Plazierung der Transporteinheit am Einsatzort auf der dortigen Trägeranordnung wieder von dem Führungskanal entfernt wird. Das Rahmengestell bietet hierbei während des Transports eine stabile Halterung für den Führungskanal und die darin liegende Energieführungskette und erleichtert die Handhabung, indem es für die zur Transportverladung und -entladung, sowie für die Positionierung am Einsatzort benötigten Hebezeuge sichere Einhängepunkte bereitstellt.

Die Hauptarbeit einschließlich des kompletten Zusammenbaus des Führungskanals und des Einziehens der schweren und unhandlichen Energieführungskette in den Führungskanal kann unter ergonomisch günstigen Bedingungen im Werk des Herstellers ausgeführt werden. Bei der Endmontage am Einsatzort finden nur noch die dort unbedingt nötigen Restarbeiten statt. Es wird geschätzt, daß sich die Arbeitszeit, die für den Abschnitt der Endmontage von der Anlieferung bis zum Bereitliegen der fertigen aber noch anzuschließenden Energieführungskette im fertig montierten Führungskanal benötigt wird, durch die Erfindung im Vergleich zu der eingangs beschriebenen herkömmlichen Vorgehensweise mindestens um den Faktor 30 reduzieren läßt.

Soweit von Abschnitten der Energieführungskette und des Führungskanals die Rede ist, bedeutet dies, daß es bei einer großen Länge derselben unter Umständen nicht möglich sein wird, das komplette System, wie es wünschenswert wäre, werksseitig vorzumontieren, da hierfür eine Längenbegrenzung durch die maximale Ladelänge des Transportfahrzeugs, in der Regel eines Lastkraftwagens, vorgegeben ist. Bei zu großer Länge wird man sich also auf die Vormontage von Teilabschnitten beschränken müssen, die dann erst am Einsatzort miteinander verbunden werden können. Dabei beträgt die maximale Abschnittslänge einer Energieführungskette bei dem erfindungsgemäßen Verfahren das doppelte derjenigen des zugehörigen Führungskanals, da die Energieführungskette zum Transport in zwei Lagen übereinander mit einer Schleife an einem Ende des Kanals in den Kanal gelegt werden kann. Zu einem Abschnitt solcher Länge einer Energieführungskette können außer demjenigen Kanalabschnitt, in dem sie abgelegt ist, bis zu drei weitere Kanalabschnitte gleicher Länge gehören, die am Einsatzort mit dem die Energieführungskette enthaltenden Abschnitt kombiniert werden müssen.

Es leuchtet ein, daß ein einmaliges Umlegen einer Energieführungskette nur zu einer weitaus geringeren Längsverschiebung zwischen der eigentlichen Führungskette und den in ihr gehaltenen Leitungen führt als das Aufspulen auf einer Trommel. Der unerwünschte, die Endmontage verkomplizierende Verschiebungseffekt wird somit durch die Erfindung wirksam reduziert bzw. bei einer kurzen Energieführungskette, die zum Transport nicht umgelegt zu werden braucht, sogar ganz eliminiert.

Besonders zweckmäßig ist es, wenn das bei der Bildung der gemeinsamen Transporteinheit verwendete Rahmengestell aus einem relativ flachen Unterteil und aus einem im Vergleich dazu ausgeprägt dreidimensionalen, nach unten offenen Oberteil besteht. Zur Einbringung des Führungskanals mit der darin liegenden Energieführungskette in das Rahmengestell kann das Oberteil einfach über den einzubringenden Komponenten abgesenkt werden. Das flache Unterteil kann entweder vorher bereits unter den Führungskanal bereitgelegt oder nach dem Absenken des Oberteils dort eingeführt und mit dem Oberteil verbunden werden. Dabei kann das Unterteil auch schwenkbar an dem Oberteil gehaltert sein, so daß es zusammen mit diesem abgesenkt und dann unter den Führungskanal eingeschwenkt werden kann. Im Ergebnis wird der Führungskanal mit der Energieführungskette vollständig von dem Rahmengestell umschlossen.

Durch die Zusammensetzung des Rahmengestells aus einem flachen Unterteil und einem dreidimensionalen Oberteil, die lösbar oder schwenk- und fixierbar miteinander verbunden sind, braucht bei der Endmontage zur Entfernung des Rahmengestells nach der Plazierung des Führungskanals am vorgesehenen Ort nur die Verbindung zwischen den beiden Teilen gelöst bzw. die Fixierung aufgehoben und das Unterteil entfernt bzw. von der Unterseite des Führungskanals weggeschwenkt zu werden, um das Abheben des Oberteils von dem Führungskanal und der Energieführungskette nach oben zu ermöglichen. Besonders vorteilhaft ist es, wenn die Verbindung zwischen dem Oberteil und dem Unterteil schwenkbar gestaltet ist, so daß das Rahmengestell zu seiner Entfernung von dem Führungskanal mit der Energieführungskette in der verschwenkten Position des Unterteils als Ganzes nach oben von dem Führungskanal und der Energieführungskette abgehoben werden kann.

Für die Lagerung wie auch für den Transport ist es zweckmäßig, wenn das Rahmengestell eine stapelbare Form hat, so daß mehrere Transporteinheiten aus Rahmengestellen und darin eingebrachten Abschnitten von Führungskanälen und Energieführungsketten platzsparend vertikal aufeinander gestapelt werden können.

Weitere Einzelheiten und Vorteile der Erfindung offenbart die nachfolgende Beschreibung eines Ausführungsbeispiels anhand der Zeichnungen. In diesen zeigt
- Fig. 1: eine Längsansicht einer erfindungsgemäßen Transporteinheit mit einer Energieführungskette und zugehörigem Führungskanal sowie einem Rahmengestell,
- Fig. 2: eine Querschnittsansicht der erfindungsgemäßen Transporteinheit von Fig. 1 und
- Fig. 3: zwei aufeinandergestapelte erfindungsgemäße Transporteinheiten in einer Querschnittsansicht entsprechend Fig. 2.

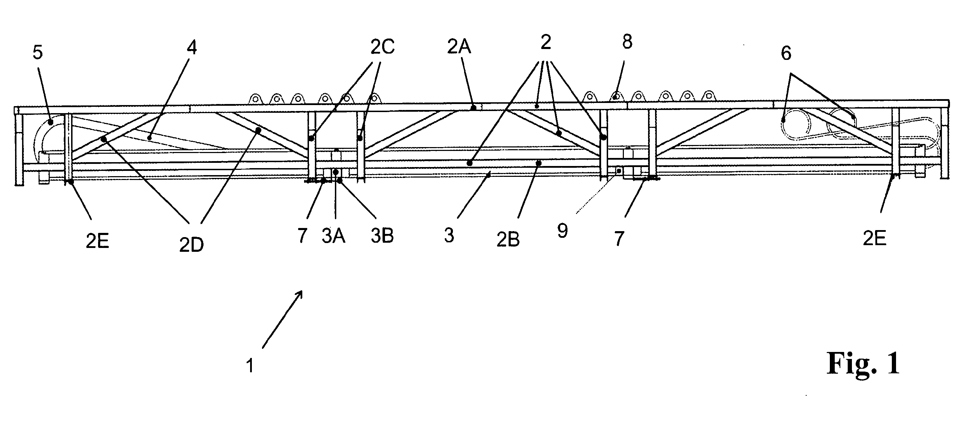

Die Längsansicht von Fig. 1 zeigt eine erfindungsgemäße Transporteinheit 1, die aus einem Rahmengestell 2 mit einem darin angeordneten Führungskanal 3 und einer in diesem abgelegten Energieführungskette 4. Die Energieführungskette 4 hat in diesem Beispiel die doppelte Länge des Führungskanals 3 und liegt in zwei Lagen übereinander in dem Führungskanal 3, wobei sie an dessen linkem Ende eine Schleife 5 bildet und am rechten Ende jeweils Endabschnitte 6 der in der Energieführungskette 4 enthaltenen Energieversorgungsleitungen aus der eigentlichen Führungskette herausragen und schleifenförmig umgelegt sind. Da der Führungskanal 3 die doppelte Höhe der Energieführungskette 4 hat, ist von letzterer nur die am linken Ende des Führungskanals 3 nach oben ragende Schleife 5 zu sehen.

An dem Rahmengestell 2 sind in Fig. 1 ein oberer und ein unterer horizontaler Längsträger 2A bzw. 2B, mehrere Vertikalträger 2C und mehrere schräge Streben 2D zu erkennen. Diese Elemente gehören zum Oberteil des Rahmengestells 2. Sämtliche genannten Elemente des Oberteils des Rahmengestells sind bei dem gezeigten Beispiel U-Profile aus Stahl. Das Unterteil des Rahmengestells 2 besteht aus mehreren einzelnen unteren horizontalen Querträgern 2E, bei denen es sich ebenfalls um U-Profile aus Stahl handelt. Die unteren horizontalen Querträger 2E sind mit dem Oberteil, d.h. genaugenommen mit den Vertikalträgern 2C entweder an beiden Enden reversibel verbindbar, oder sie sind an einem Ende um eine vertikale Achse schwenkbar mit einem Vertikalträger 2C verbunden und am anderen Ende mit einem gegenüberliegenden Vertikalträger 2C verbindbar. Wenn an beiden Enden eines unteren horizontalen Querträgers 2E jeweils eine Verschraubung mit einem Vertikalträger 2C vorgesehen ist, kann der untere horizontale Querträger 2E wahlweise durch Lockern einer Verschraubung und Lösen der jeweils anderen um die Achse der gelockerten Verschraubung geschwenkt, als auch durch Lösen beider Verschraubungen vollständig von dem Oberteil entfernt werden.

Zur Befestigung des Führungskanals 3 am Einsatzort weist der Führungskanal 3 mehrere in Längsrichtung äquidistant angeordnete Halter 3A, 3B auf. Eine Klammer 3A des Halters 3A, 3B umgreift das im wesentlichen U-förmige Wandprofil des Führungskanals 3 auf dessen Außenseite und ist mit ihm fest verbunden, insbesondere verschraubt. An ihrer Unterseite weisen die Halter 3A, 3B jeweils einen Flansch 3B auf, der seitlich von dem Führungskanal 3 abragt und zur Befestigung des Führungskanals 3 an einer am Einsatzort vorgesehenen Trägeranordnung dient. Die Halter 3A, 3B des Führungskanals 3 sind in Längsrichtung gegenüber den unteren horizontalen Querträgern 2E des Rahmengestells 2 versetzt angeordnet.

In Fig. 1 sind Transportsicherungen 7 angedeutet, mittels derer der Führungskanal 3 an dem Rahmengestell 2 für den Transport gegen Verschiebung in Längsrichtung gesichert ist. Diese Transportsicherungen 7 sind jeweils an unteren horizontalen Querträgern 2E befestigt und fixieren durch einen jeweiligen Eingriff mit einem Flansch 3B eines Halters 3A, 3B den Führungskanal 3 gegenüber dem Rahmengestell 2 in Längsrichtung. Sie werden nach der Montage des Führungskanals 3 am Einsatzort des Energieführungskettensystems, d.h. nach der Befestigung des Führungskanals 3 an der dafür vorgesehenen Trägeranordnung, wieder gelöst.

An dem oberen horizontalen Längsträger 2A sind mehrere Hebelaschen 8 befestigt, beispielsweise angeschweißt, die ein sicheres Einhängen von Haken eines Hebezeuges zur Handhabung der Transporteinheit 1 beim Ver- und Entladen sowie bei der Endmontage am Einsatzort ermöglichen. Wie Fig. 1 erkennen läßt, sind an dem oberen horizontalen Längsträger 2A zwei voneinander beabstandete Gruppen von jeweils mehreren Hebelaschen 8 vorhanden, so daß mehrere Einhängepunkte für Haken von Hebezeugen zur Auswahl stehen, die es erlauben, die Haken eines Hebezeuges je nach der aktuellen Schwerpunktlage der Transporteinheit 1, die vor allem von der Länge und der Lage der Energieführungskette 4 abhängt, so zu plazieren, daß die Transporteinheit 1 beim Anheben immer eine waagrechte Lage einnimmt.

In Vertikalrichtung mit einigen der Hebelaschen 8 fluchtend ragen von dem unteren horizontalen Längsträger 2B Fixierlaschen 9 nach unten ab. Diese sind dazu bestimmt, beim Aufeinanderstapeln zweier Rahmengestelle 2 mit einigen der Hebelaschen 8 des darunter befindlichen Rahmengestells 2 in Eingriff zu gelangen, um dadurch eine Fixierung der beiden aufeinandergestapelten Rahmengestelle 2 in Querrichtung zu bewirken.

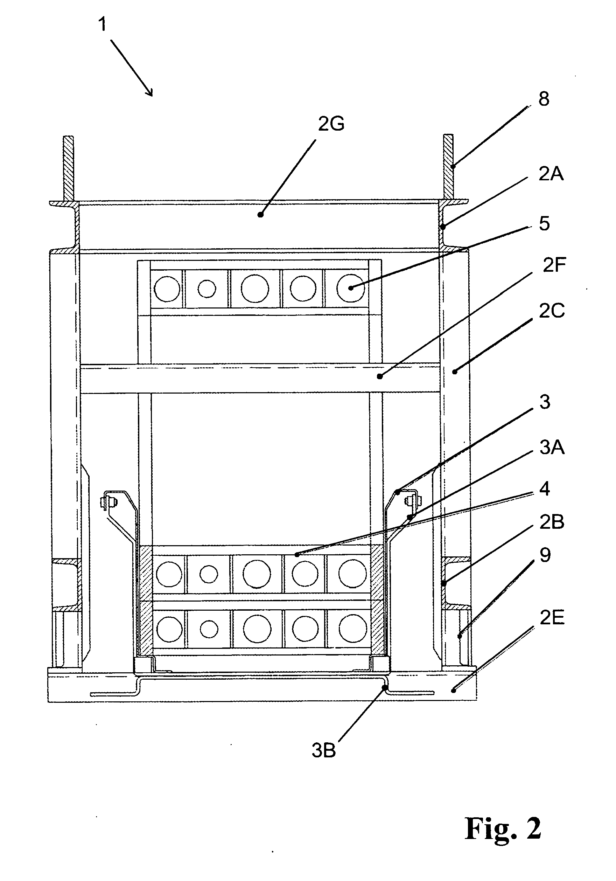

Fig. 2 zeigt eine Querschnittsansicht einer erfindungsgemäßen Transporteinheit 1. Die in Fig. eingetragenen Bezugszahlen entsprechen denjenigen von Fig. 1. Deutlich zu erkennen ist hier, daß die Energieführungskette 4 in zwei Lagen übereinander in dem Führungskanal 3 liegt. Um die vorhandene Schleife 5 der Energieführungskette 4 besser kenntlich zu machen, ist an dieser eine Schnittdarstellung angedeutet. Wie aus Fig. 2 ersichtlich ist, hat das Rahmengestell 2 in der Querschnittsansicht in Bezug auf seine in vertikaler Richtung verlaufende Mittelebene einen symmetrischen Aufbau, so daß auf eine Kennzeichnung der Komponenten der linken Hälfte mit Bezugszahlen verzichtet werden kann.

Neben dem Verlauf eines der unteren horizontalen Querträger 2E ist hier auch einer der mittleren und einer der oberen horizontalen Querträger 2F bzw. 2G sichtbar, die in der Ansicht von Fig. 1 vollständig verdeckt sind. An den horizontalen Längsträgern 2A und 2B ist deren Ausbildung als U-Profile sichtbar.

An dem Führungskanal 3 sind in Fig. 2 die Formen der Klammer 3A und des Flansches 3B des Halters 3A, 3B sowie eine Schraubverbindung zwischen der Klammer 3A und dem Wandprofil des Führungskanals 3 deutlich erkennbar. Die horizontal abragenden Abschnitte des Flansches 3B sind dazu bestimmt, mit einer am Einsatzort vorgesehenen Trägeranordnung, beispielsweise in Form mehrerer von einem Träger abragender Konsolen verbunden, insbesondere verschraubt zu werden, um das Energieführungskettensystem zu befestigen. Die untere Auflagenäche der Befestigungsflansche 3A befindet sich geringfügig oberhalb der derjenigen der unteren horizontalen Querträger 2E, so daß die Transporteinheit 1 beim Abstellen auf dem Boden stets auf den unteren horizontalen Querträgern 2E ruht.

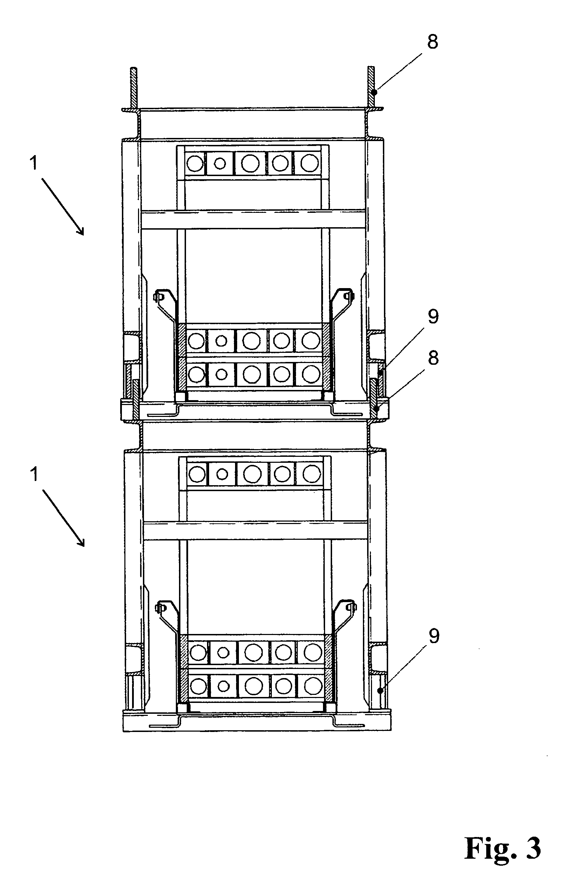

In Fig. 3 sind zwei Transporteinheiten 1 aufeinandergestapelt gezeigt. Dabei entspricht die Darstellung jeder einzelnen der beiden Transporteinheiten derjenigen von Fig. 2. Lediglich die Fixierungslaschen 9 des Rahmengestells 2 der oberen Transporteinheit 1 sind hier im Gegensatz zu Fig. 2 zur Verdeutlichung ebenfalls geschnitten gezeichnet. Wie Fig. 3 zu entnehmen ist, sind die Fixierungslaschen 9 gegenüber den Hebelaschen 8 nach außen versetzt, jedoch unmittelbar benachbart zu ersteren angeordnet, so daß sich durch das Absetzen der oberen Transporteinheit 1 auf die untere Transporteinheit 1 insgesamt ein formschlüssiger Eingriff zwischen den Hebelaschen 8 des Rahmengestells 2 der unteren Transporteinheit 1 und den Fixierungslaschen 9 des Rahmengestells 2 der oberen Transporteinheit 1 ergibt, der für eine Fixierung in seitlicher Richtung sorgt.

In Längsrichtung erfolgt eine Fixierung beim Aufeinanderstapeln durch einen formschlüssigen Eingriff zwischen bestimmten Hebelaschen 8 des Rahmengestells 2 der unteren Transporteinheit 1 und bestimmten unteren horizontalen Querträgern 2E des Rahmengestells 2 der oberen Transporteinheit 1. Hierzu sind die in Fig. 1 erkennbaren Zwischenräume in der Abfolge der Hebelaschen 8 jeder der beiden Gruppen über den vier mittleren Vertikalträger 2C vorgesehen, in denen beim Aufeinanderstapeln die unteren horizontalen Querträger 2E des Rahmengestells 2 der oberen Transporteinheit 1 zu liegen kommen.

Das erfindungsgemäße Verfahren sieht vor, zur Bildung einer Transporteinheit 1 zunächst einen fertig aufgebauten, d.h. mit den Haltern 3A, 3B versehenen Führungskanal 3 bereitzustellen, und zwar auf einem in den Figuren nicht dargestellten Träger, der für einen gewissen Mindestabstand der Unterseite des Führungskanals 3 vom Boden sorgt. Anschließend wird die fertig vorkonfektionierte Energieführungskette 4 in den Führungskanal 3 eingelegt und dabei je nach ihrer Länge bei Bedarf einmal unter Bildung einer Schleife 5 an einem Ende des Führungskanals 3 umgelegt. Die vorherigen Arbeiten sowohl am Führungskanal 3, als auch an der Energieführungskette 4 können dabei im Herstellerwerk unter optimalen ergonomischen und logistischen Rahmenbedingungen durchgeführt werden. Unter dem fertig vorkonfektionierten Zustand der Energieführungskette 4 ist hierbei zu verstehen, dass zumindest die eigentliche Kette aus ihren Einzelteilen fertig zusammengebaut ist und die Leitungen in die Kette eingezogen sind. Vorzugsweise sind auch bereits die Zugentlastungen an den Enden der Leitungen montiert.

Dann wird ebenfalls im Herstellerwerk das Rahmengestell 2 mit einem Kran über die bereitgelegte Kombination aus Führungskanal 3 und Energieführungskette 4 gehoben. Zum Einhängen der Haken des Krans stehen an dem Rahmengestell 2 mehrere Hebelaschen 8 zur Verfügung. Dabei sind die unteren horizontalen Querträger 2E, die jeweils zur Verschraubung mit einem Paar einander gegenüberliegender Vertikalträger 2C am unteren Ende derselben vorgesehen sind, bereits auf einer Längsseite des Rahmengestells 2 angeschraubt, jedoch nicht festgezogen, so daß sich jeder Querträger 2E noch um die Längsachse des jeweiligen Vertikalträgers 2C, an den er an einem Ende angeschraubt ist, drehen läßt. Außerdem sind alle Querträger 2E in eine Position geschwenkt, in der sie nach außen von dem Rahmgestell 2 wegragen, so daß die Unterseite des Rahmengestells 2 offen ist.

Das Rahmengestell 2 wird nun von oben her über die Kombination aus Führungskanal 3 und Energieführungskette 4 abgesenkt, bis die unteren horizontalen Querträger 2E sich in einer Position unterhalb des Führungskanals 3 befinden. Dann werden die Querträger 2E unter den Führungskanal 3 geschwenkt und auf der anderen Längsseite des Rahmengestells 2 mit den. Enden der dortigen Vertikalträger 2C verbunden. Die Schraubverbindungen zwischen den Querträgern 2E und den Vertikalträger 2C werden nun auf beiden Längsseiten des Rahmengestells 2 fest angezogen.

Schließlich werden die Transportsicherungen 7 fixiert. Bei diesen handelt es sich um Bolzen, die von zwei verschiedenen Querträgern 2E aus in Längsrichtung des Rahmengestells 2 verlaufen und durch Schraubgewinde mit Flanschen 3B der Halter 3A, 3B des Führungskanals 3 verspannt werden, um letzteren innerhalb des Rahmengestells 2 in Längsrichtung zu fixieren. In Querrichtung ist eine Fixierung durch eine Transportsicherung nicht nötig, da die lateralen Abmessungen des Rahmengestells 2 an diejenigen des Führungskanals 3 bis auf eine gewisse Toleranz angepaßt sind. Außerdem bewirkt die Verspannung in Längsrichtung gleichzeitig auch eine kraftschlüssige Fixierung in Querrichtung.

Die auf diese Weise gebildete Transporteinheit 1, welche das Rahmengestell 2, den Führungskanal 3 und die in diesem liegende Energieführungskette 4 umfaßt, kann nun zu einem Lagerplatz gebracht werden, wo sie bis zur Verladung zum Transport an den Einsatzort des Energieführungskettensystems gelagert wird, beispielsweise mit dem bereits zum Absenken des Rahmengestells 2 verwendeten Kran. Allerdings kann der Schwerpunkt der kompletten Transporteinheit 1 wegen des üblicherweise beträchtlichen Gewichts der Energieführungskette 4 ein anderer sein als derjenige des leeren Rahmengestells 2. Um eine Schräglage beim Anheben der kompletten Transporteinheit 1 zu vermeiden, kann es nötig sein, die Haken des Krans vor dem Anheben der Transporteinheit 1 zu anderen Hebelaschen 8 zu versetzen. Hierzu muß der Träger, auf dem der Führungskanal 3 mit der Energieführungskette 4 für die Bildung der Transporteinheit 1 bereitgelegt wird, so ausgelegt sein, daß das Rahmengestell 2 von dem Kran beim Absenken über dem Führungskanal 3 mit der Energieführungskette 4 nach dem Einschwenken und Festschrauben der Querträger 2E vollständig abgesetzt werden kann, so daß es entweder auf dem Boden oder auf besagtem Träger ruht.

Bei der Lagerung können mehrere Transporteinheiten 1 übereinander gestapelt werden, wie es in Fig. 3 gezeigt ist. Gleiches gilt auch für den Transport zum Einsatzort des Energieführungskettensystems, der typischerweise mittels eines Lastkraftwagens erfolgt. Wie bereits erwähnt, ist die maximale Länge einer Transporteinheit 1 maßgeblich durch die Länge der Ladefläche des Transportfahrzeugs begrenzt.

Am Einsatzort wird die Transporteinheit 1 von der Ladefläche des Transportfahrzeugs gehoben und dann von einem Kran an ihren vorgesehenen Platz gehoben. Zur Anpassung der Einhängepunkte der Kranhaken an die Lage des Schwerpunktes der Transporteinheit 1 stehen, wie bereits erwähnt, etliche Hebelaschen 8 in Längsrichtung verteilt zur Auswahl. Zur Anbringung des Führungskanals 3 am Einsatzort des Energieführungskettensystems muß dort eine geeignete Trägeranordnung vorbereitet sein. In der Regel sind entlang des vorgesehenen Verlaufs des Führungskanals 3 an einem längs der vorgesehenen Bewegungsrichtung des zu versorgenden Verbrauchers verlaufenden Träger mehrere seitlich abragende Kulissen in Abständen angeordnet, die genau den Abständen der Halter 3A, 3B des Führungskanals 3 entsprechen. Diese Kulissen sind dazu bestimmt, den Führungskanal 3 an den Flanschen 3B der Halter 3A, 3B zu tragen, wozu die Transporteinheit 1 durch den Kran so abgesetzt wird, daß die Flansche 3B der Halter 3A, 3B des Führungskanals 3 auf besagten Kulissen zu liegen kommen. Die unteren horizontalen Querträger 2E des Transportgestells 2 befinden sich dann in den Freiräumen zwischen den Kulissen.

Jetzt werden als erstes die Flansche 3B an den Kulissen festgeschraubt, um den Führungskanal 3 an den Kulissen zu befestigen. Danach werden die Verschraubungen der unteren horizontalen Querträger 2E mit den unteren Enden der Vertikalträger 2C auf einer Längsseite des Transportgestells 2 ganz gelöst und auf der anderen gelockert. Dann werden die Querträger 2E aus dem Bereich unterhalb des Führungskanals 2 herausgeschwenkt, so daß die Unterseite des Rahmengestells 2 offen ist. Schließlich wird das Rahmengestell 2 nach oben von dem Führungskanal 3 mit der darin liegenden Energieführungskette 4 angehoben und entfernt. Damit ist der hier interessierende Abschnitt der Endmontage des Energieführungskettensystems bereits erledigt. Als nächstes können die Leitungen der Energieführungskette 4 angeschlossen werden.

Falls das zu montierende Energieführungskettensystem insgesamt länger ist als es eine Transporteinheit 1 sein kann, dann können werden mehrere Längsabschnitte des Energieführungskettensystems als separate Transporteinheiten 1 angeliefert und nacheinander in der vorausgehend beschriebenen Weise in Längsrichtung aneinander anschließend montiert werden. Insofern sind in der vorausgehenden Beschreibung mit einem Führungskanal 3 und einer Energieführungskette 4 grundsätzlich jeweilige Abschnitte derselben und nicht die jeweiligen Gesamteinheiten des Systems gemeint. Dabei kann eine Transporteinheit 1 auch nur einen Führungskanal 3 ohne Energieführungskette 4 enthalten, da der maximale Bewegungsbereich einer einmal umgelegten, in zwei Lagen übereinanderliegenden Energieführungskette 4 bis zum Vierfachen der Länge des eine solche Energieführungskette 4 enthaltenden Führungskanals 3 betragen kann. Es ist grundsätzlich auch möglich, nur einen einzigen Längsabschnitt eines Energieführungskettensystems in Form einer Transporteinheit 1, die sowohl einen Führungskanal 3, als auch eine Energieführungskette 4 enthält, wie zuvor beschrieben zu montieren und zusätzliche Längsabschnitte, die jeweils nur aus einem Führungskanal 3 allein bestehen, ohne Verwendung eines Transportgestells 2 zu montieren, da ein leerer Führungskanal wesentlich leichter und somit bei der Montage einfacher zu handhaben ist.

Falls die Länge einer Transporteinheit 1 trotz einmaligen Umlegens der Energieführungskette 4 nicht für die benötigte Gesamtlänge der Energieführungskette 4 ausreicht, können auch mehrere Transporteinheiten 1 jeweils sowohl einen Führungskanal 3, als auch eine Energieführungskette 4 enthalten. In diesem Fall müssen bei der Endmontage noch die separaten Abschnitte der Energieführungskette 4 miteinander zu einer Gesamteinheit verbunden werden, wie es auch beim Einziehen einer langen, auf mehrere Trommeln verteilt angelieferten Energieführungskette in einen Führungskanal nötig ist.

Aus der vorausgehenden Beschreibung eines Ausführungsbeispiels erschließen sich dem Fachmann eine Reihe von Variationsmöglichkeiten der vorliegenden Erfindung. So wäre es beispielsweise möglich, anstelle der Ausbildung des Unterteils des Rahmengestells 2 in Form einer Vielzahl einzelner unterer horizontaler Querträger 2E ein zusammenhängendes schwenkbares Unterteil vorzusehen. Auch brauchen die Querträger 2E bzw. das schwenkbare Unterteil nicht unbedingt um eine vertikale Achse schwenkbar zu sein, sondern es wäre auch denkbar, ein Scharniergelenk mit einer horizontalen Achse zum Ein- und Ausschwenken der Querträger 2E vorzusehen. Ebenso müssen die Querträger 2E bzw. das Unterteil nicht unbedingt schwenkbar sein, sondern es wäre auch denkbar, auf der Unterseite des Oberteils des Rahmengestells 2 auf beiden Längsseiten Halterungen vorzusehen, in welche die Querträger 2E bzw. das Unterteil von der Seite her eingeschoben werden können, und aus denen sie zur Seite wieder herausgezogen werden können. Solche und vergleichbare Modifikationen, die im Ermessen des einschlägigen Fachmannes liegen, sind Bestandteil der Erfindung und sollen vom Schutz der Patentansprüche umfaßt sein.

## Patentansprüche

1. Verfahren zur Montage eines Energieführungskettensystems, das eine Energieführungskette mit mindestens einer in einer Führungskette angeordneten Energieversorgungsleitung sowie mit einem Führungskanal zur Führung der Bewegung der Energieführungskette im Betrieb aufweist, **dadurch gekennzeichnet, dass** zumindest ein jeweiliger Abschnitt der Energieführungskette (4) und des Führungskanals (3) abseits des Einsatzortes des Energieführungskettensystems vormontiert werden, ferner unter Ablage des Abschnitts der Energieführungskette (4) in dem Abschnitt des Führungskanals (3) eine gemeinsame Transporteinheit (1) gebildet wird, bei der Bildung der gemeinsamen Transporteinheit (1) der Abschnitt des Führungskanals (3) zusammen mit dem darin abgelegten Abschnitt der Energieführungskette (4) in ein Rahmengestell (2) eingebracht wird, die gemeinsame Transporteinheit (1) als Ganzes zum Einsatzort des Energieführungskettensystems transportiert wird, bei der Endmontage am Einsatzort der Abschnitt des Führungskanals (3) zusammen mit dem darin abgelegten Abschnitt der Energieführungskette (4) auf einer Trägeranordnung, welche zum Tragen des Energieführungskettensystems im Betrieb bestimmt ist, plaziert und an dieser befestigt wird, und der Abschnitt des Führungskanals (3) bei der Endmontage am Einsatzort in dem Rahmengestell (2) auf der Trägeranordnung plaziert und das Rahmengestell (2) danach wieder entfernt wird.

2. Verfahren nach Anspruch 1, **dadurch gekennzeichnet, daß** der Abschnitt des Führungskanals (3) bei der Bildung der gemeinsamen Transporteinheit (1) an dem Rahmengestell (2) durch eine Transportsicherung (7) befestigt wird und diese Befestigung bei der Endmontage nach der Befestigung des Abschnitts des Führungskanals (3) an der Trägeranordnung gelöst wird.

3. Verfahren nach Anspruch 1 oder 2, **dadurch gekennzeichnet, daß** der Abschnitt des Führungskanals (3) mit dem darin abgelegten Abschnitt der Energieführungskette (4) zur Einbringung in das Rahmengestell (2) zunächst auf einem Unterteil (2E) des Rahmengestells (2) abgelegt wird, daß danach ein Oberteil (2A, 2B, 2C, 2D, 2F, 2G) des Rahmengestells (2) in eine Position über dem Unterteil (2E) gebracht wird, in der die beiden Teile des Rahmengestells (2) zusammen den Abschnitt des Führungskanals (3) und den Abschnitt der Energieführungskette (4), umschließen, und daß die beiden Teile des Rahmengestells (2) anschließend miteinander verbunden werden.

4. Verfahren nach Anspruch 1 oder 2, **dadurch gekennzeichnet, daß** der Abschnitt des Führungskanals (3) mit dem darin abgelegten Abschnitt der Energieführungskette (4) zur Einbringung in das Rahmengestell (2) zunächst auf einem Träger abgelegt wird, daß danach ein Oberteil (2A, 2B, 2C, 2D, 2F, 2G) des Rahmengestells (2) in eine Position über dem Abschnitt des Führungskanals (3) gebracht wird, in der sein Oberteil (2A, 2B, 2C, 2D, 2F, 2G) den Abschnitt des Führungskanals (3) und den Abschnitt der Energieführungskette (4) bis auf die Unterseite umschließt, und daß anschließend ein Unterteil (2E) des Rahmengestells (2) in eine Position unter dem Abschnitt des Führungskanals (3) gebracht und dort an dem Oberteil (2A, 2B, 2C, 2D, 2F, 2G) befestigt wird.

5. Verfahren nach Anspruch 1 oder 2, **dadurch gekennzeichnet, daß** der Abschnitt des Führungskanals (3) mit dem darin abgelegten Abschnitt der Energieführungskette (4) zur Einbringung in das Rahmengestell (2) zunächst auf einem Träger abgelegt wird, daß danach das Rahmengestell (2), das aus einem Oberteil (2A, 2B, 2C, 2D, 2F, 2G) und aus einem schwenkbar mit diesem verbundenen Unterteil (2E) besteht, mit von der Unterseite des Oberteils (2A, 2B, 2C, 2D, 2F, 2G) weggeschwenktem Unterteil (2E) in eine Position über dem Abschnitt des Führungskanals (3) und dem Abschnitt der Energieführungskette (4) gebracht wird, in der sein Oberteil (2A, 2B, 2C, 2D, 2F, 2G) den Abschnitt des Führungskanals (3) und den Abschnitt der Energieführungskette (4) bis auf die Unterseite umschließt, und daß das Unterteil (2E) anschließend unter den Führungskanal (3) geschwenkt und in dieser Stellung fixiert wird.

6. Verfahren nach einem der Ansprüche 3 bis 5, **dadurch gekennzeichnet, daß** bei der Endmontage zur Entfernung des Rahmengestells (2) die Verbindung zwischen dessen Oberteil (2A, 2B, 2C, 2D, 2F, 2G) und dessen Unterteil (2E) vollständig gelöst wird, und daß das Oberteil (2A, 2B, 2C, 2D, 2F, 2G) separat vom Unterteil (2E) nach oben von dem Führungskanal (3) abgehoben wird.

7. Verfahren nach einem der Ansprüche 3 bis 5, **dadurch gekennzeichnet, daß** bei der Endmontage zur Entfernung des Rahmengestells (2) die Verbindung zwischen dessen Oberteil (2A, 2B, 2C, 2D, 2F, 2G) und dessen Unterteil (2E) gelockert und/oder die Fixierung der Stellung des Unterteils (2E) aufgehoben wird, daß das Unterteil (2E) von der Unterseite des Führungskanals (3) weggeschwenkt wird, und daß das Rahmengestell (2) in der weggeschwenkten Position des Unterteils (2E) nach oben von dem Führungskanal (3) abgehoben wird.

8. Verfahren nach einem der Ansprüche 1 bis 7, **dadurch gekennzeichnet, daß** mehrere Transporteinheiten (1) aus Rahmengestellen (2) und darin eingebrachten Abschnitten von Führungskanälen (3) und Energieführungsketten (4) vor, während oder nach dem Transport vom Ort der Vormontage zum Einsatzort vertikal aufeinander gestapelt werden.

9. Verfahren nach einem der Ansprüche 1 bis 8, **dadurch gekennzeichnet, daß** der Abschnitt des Führungskanals (3) und/oder der Energieführungskette (4) dessen bzw. deren gesamte Länge umfaßt.

10. Verfahren nach einem der Ansprüche 1 bis 8, **dadurch gekennzeichnet, daß** bei der Vormontage entsprechend der Gesamtlänge des Energieführungskettensystems mehrere Transporteinheiten (1), die jeweils Abschnitte des Führungskanals (3) und/oder der Energieführungskette (4) enthalten, gebildet werden und diese Abschnitte am Einsatzort in Längsrichtung aneinander anschließend montiert werden.

11. Verfahren nach Anspruch 10, **dadurch gekennzeichnet, daß** eine Transporteinheit (1), die einen Abschnitt des Führungskanals (3) und eine ganze Energieführungskette (4) enthält, und mehrere Transporteinheiten (1), die nur Abschnitte des Führungskanals (3) enthalten, gebildet und diese Abschnitte am Einsatzort in Längsrichtung aneinander anschließend montiert werden.

12. Vorrichtung zur Durchführung des Verfahrens nach einem der Ansprüche 1 bis 11, die aus einem Rahmengestell (2) besteht, dessen Form und Abmessungen so an die Form und die Abmessungen eines Führungskanals (3) eines Energieführungskettensystems und an den Krümmungsradius einer zugehörigen Energieführungskette (4) angepaßt sind, daß es zumindest einen Abschnitt des Führungskanals (3) und einen in diesem abgelegten, einmal umgelegten Abschnitt der zugehörigen Energieführungskette (4) aufnehmen und bei allen Arten von Transportbewegungen außer Drehungen um horizontale Achsen sicher tragen kann.

13. Vorrichtung nach Anspruch 12, **dadurch gekennzeichnet, daß** die Form und die Abmessungen des Rahmengestells (2) so an die Positionen und Abmessungen von entlang des Abschnitts des Führungskanals (3) angeordneten Befestigungselementen (3B) zur Befestigung des Abschnitts des Führungskanals (3) auf einer Trägeranordnung an einem Einsatzort des Energieführungskettensystems angepaßt sind, daß die Befestigungselemente (3C) als solche benutzbar sind, während der Abschnitt des Führungskanals (3) in dem Rahmengestell (2) aufgenommen ist.

14. Vorrichtung nach Anspruch 12 oder 13, **dadurch gekennzeichnet, daß** das Rahmengestell (2) Transportsicherungen (7) zur Fixierung des Führungskanals (3) in Längsrichtung aufweist.

15. Vorrichtung nach einem der Ansprüche 12 bis 14, **dadurch gekennzeichnet, daß** sich das Rahmengestell (2) aus einem dreidimensionalen Oberteil (2A, 2B, 2C, 2D, 2F, 2G) und aus einem mit diesem reversibel verbindbaren oder an diesem schwenk- und fixierbar verbundenen, flachen Unterteil (2E) zusammensetzt.

16. Vorrichtung nach Anspruch 15, **dadurch gekennzeichnet, daß** das flache Unterteil (2E) aus einer Vielzahl einzelner horizontaler Querträger (2E) besteht.

17. Vorrichtung nach Anspruch 16, **dadurch gekennzeichnet, daß** das Oberteil (2A, 2B, 2C, 2D, 2F, 2G) zumindest eine Vielzahl von miteinander verbundenen horizontalen Längsträgern (2A) und Querträgern (2F, 2G) sowie Vertikalträgern (2C) aufweist, und daß die das flache Unterteil (2E) bildenden horizontalen Querträger (2E) jeweils mit Vertikalträgern (2C) verbindbar oder schwenk- und fixierbar mit diesen verbunden sind.

18. Vorrichtung nach einem der Ansprüche 12 bis 17, **dadurch gekennzeichnet, daß** das Rahmengestell (2) Elemente (8, 9) aufweist, die bei einem Aufeinanderstapeln zweier Rahmengestelle (2) miteinander in Eingriff geraten und die Lage der übereinanderliegenden Rahmengestelle (2) relativ zueinander fixieren.

19. Vorrichtung nach einem der Ansprüche 12 bis 18, **dadurch gekennzeichnet, daß** an oberen horizontalen Längsträgern (2A) des Rahmengestells (2) jeweils eine Vielzahl von Hebelaschen (8) in Längsrichtung nacheinander angeordnet ist, in die Haken von Hebezeugen einhängbar sind, wobei die Anzahl der Hebelaschen (8) größer als die zum Anheben benötigte Anzahl ist, so daß beim Anheben eine Auswahlmöglichkeit für die Einhängepunkte der Haken bereitsteht.

20. Vorrichtung nach Anspruch 18 und 19, **dadurch gekennzeichnet, daß** zumindest einige der Hebelaschen (8) zugleich als Elemente (8) zur Fixierung der Lage aufeinandergestapelter Rahmengestelle (2) fungieren.

## Claims

1. Method for assembling a power guide chain system which exhibits a power guide chain with at least one power supply line arranged in a guide chain and with a guide channel for guiding the movement of the power guide chain while in operation, **characterised in that** at least one respective portion of the power guide chain (4) and of the guide channel (3) are preassembled off the site of use of the power guide chain system, further a joint transport unit (1) is formed when the portion of the power guide chain (4) is located in the portion of the guide channel (3), when the joint transport unit (1) is formed the portion of the guide channel (3) together with the portion of the power guide chain (4) located in it is placed in a frame (2), the joint transport unit (1) is transported as a whole to the site of use of the power guide chain system, at the time of final assembly on the site of use the portion of the guide channel (3) together with the portion of the power guide chain (4) located in it is placed on a carrier arrangement which is designed to carry the power guide chain system while in operation, and fastened to it, and at the time of final assembly on the site of use the portion of the guide channel (3) is placed in the frame (2) on the carrier arrangement and the frame (2) is then removed again.

2. Method according to claim 1, **characterised in that** when the joint transport unit (1) is formed, the portion of the guide channel (3) is fastened to the frame (2) by a transport fixture (7) and at the time of final assembly after the portion of the guide channel (3) is fastened to the carrier arrangement this fixture is released.

3. Method according to claim 1 or 2, **characterised in that** for location in the frame (2) the portion of the guide channel (3) with the portion of the power guide chain (4) located in it is first located on a lower part (2E) of the frame (2), **in that** after this an upper part (2A, 2B, 2C, 2D, 2F, 2G) of the frame (2) is brought into a position above the lower part (2E) in which the two parts of the frame (2) together surround the portion of the guide channel (3) and the portion of the power guide chain (4), and **in that** the two parts of the frame (2) are then joined to one another.

4. Method according to claim 1 or 2, **characterised in that** for location in the frame (2) the portion of the guide channel (3) with the portion of the power guide chain (4) located in it is first placed on a carrier, **in that** after this an upper part (2A, 2B, 2C, 2D, 2F, 2G) of the frame (2) is brought into a position above the portion of the guide channel (3) in which its upper part (2A, 2B, 2C, 2D, 2F, 2G) surrounds the portion of the guide channel (3) and the portion of the power guide chain (4) except for the underside, and **in that** then a lower part (2E) of the frame (2) is brought into a position under the portion of the guide channel (3) and there fastened to the upper part (2A, 2B, 2C, 2D, 2F, 2G) .

5. Method according to claim 1 or 2, **characterised in that** for location in the frame (2) the portion of the guide channel (3) with the portion of the power guide chain (4) located in it is first located on a carrier, **in that** after this the frame (2), which consists of an upper part (2A, 2B, 2C, 2D, 2F, 2G) and of a lower part (2E) connected pivotably to it, is brought with the lower part (2E) pivoted away from the underside of the upper part (2A, 2B, 2C, 2D, 2F, 2G) into a position above the portion of the guide channel (3) and the portion of the power guide chain (4) in which its upper part (2A, 2B, 2C, 2D, 2F, 2G) surrounds the portion of the guide channel (3) and the portion of the power guide chain (4) except for the underside, and **in that** the lower part (2E) is then pivoted under the guide channel (3) and fixed in this position.

6. Method according to one of claims 3 to 5, **characterised in that** at the time of final assembly to remove the frame (2) the connection between its upper part (2A, 2B, 2C, 2D, 2F, 2G) and its lower part (2E) is released completely, and **in that** the upper part (2A, 2B, 2C, 2D, 2F, 2G) is lifted upwards away from the guide channel (3) separately from the lower part (2E).

7. Method according to one of claims 3 to 5, **characterised in that** at the time of final assembly to remove the frame (2) the connection between its upper part (2A, 2B, 2C, 2D, 2F, 2G) and its lower part (2E) is loosened and/or the fixture of the position of the lower part (2E) is released, **in that** the lower part (2E) is pivoted away from the underside of the guide channel (3), and **in that** the frame (2) is lifted upwards away from the guide channel (3) when the lower part (2E) is pivoted away.

8. Method according to one of claims 1 to 7, **characterised in that** a plurality of transport units (1) comprising frames (2) and portions of guide channels (3) and power guide chains (4) located therein are stacked vertically one upon another before, during or after transport from the preassembly location to the site of use.

9. Method according to one of claims 1 to 8, **characterised in that** the portion of the guide channel (3) and/or the power guide chain (4) comprises its or their total length.

10. Method according to one of claims 1 to 8, **characterised in that** at the time of preassembly according to the overall length of the power guide chain system, a plurality of transport units (1), which each comprise portions of the guide channel (3) and/or the power guide chain (4), are formed and these portions are then assembled to one another in the longitudinal direction at the site of use.

11. Method according to claim 10, **characterised in that** a transport unit (1) which comprises a portion of the guide channel (3) and a whole power guide chain (4), and a plurality of transport units (1) which only comprise portions of the guide channel (3), are formed and these portions are then assembled to one another in the longitudinal direction at the site of use.

12. Device for implementing the method according to one of claims 1 to 11, which consists of a frame (2), the shape and dimensions of which are matched to the shape and dimensions of a guide channel (3) of a power guide chain system and to the radius of curvature of an associated power guide chain (4) so that it can accommodate at least one portion of the guide channel (3) and a portion of the corresponding power guide chain (4) located in it and folded over once, and can safely carry these in all kinds of transport movements except for rotations about horizontal axes.

13. Device according to claim 12, **characterised in that** the shape and the dimensions of the frame (2) are matched to the positions and dimensions of fastening elements (3B) arranged along the portion of the guide channel (3) for fastening the portion of the guide channel (3) on a carrier arrangement at a site of use of the power guide chain system, so that the fastening elements (3C) can be used as such while the portion of the guide channel (3) is accommodated in the frame (2).

14. Device according to claim 12 or 13, **characterised in that** the frame (2) exhibits transport fixtures (7) for fixing the guide channel (3) in the longitudinal direction.

15. Device according to one of claims 12 to 14, **characterised in that** the frame (2) is composed of a three-dimensional upper part (2A, 2B, 2C, 2D, 2F, 2G) and of a flat lower part (2E) which can be connected reversibly to the latter or is connected to the latter pivotably and fixably.

16. Device according to claim 15, **characterised in that** the flat lower part (2E) consists of a plurality of individual horizontal transverse members (2E).

17. Device according to claim 16, **characterised in that** the upper part (2A, 2B, 2C, 2D, 2F, 2G) exhibits at least a plurality of horizontal longitudinal members (2A) and transverse members (2F, 2G) and vertical members (2C) connected to one another, and **in that** the horizontal transverse members (2E) forming the flat lower part (2E) are connected to these in each case with vertical members (2C) connectably or pivotably and fixably.

18. Device according to one of claims 12 to 17, **characterised in that** the frame (2) exhibits elements (8, 9) which engage with one another when two frames (2) are stacked on one another and fix the position of the frames (2) lying one upon another relative to one another.

19. Device according to one of claims 12 to 18, **characterised in that** arranged on upper horizontal longitudinal members (2A) of the frame (2) there are in each case a plurality of lifting lugs (8) arranged one after another in the longitudinal direction, into which hooks of lifting equipment can be hooked, the number of lifting lugs (8) being greater than the number required for lifting so that when lifting, there is a possibility of choice of the points of attachment of the hooks.

20. Device according to claim 18 and 19, **characterised in that** at least some of the lifting lugs (8) also function as elements (8) for fixing the position of frames (2) stacked one upon another.

## Revendications

1. Procédé de montage d'un système à chaîne de guidage d'énergie comprenant une chaîne de guidage d'énergie avec au moins un conduit d'alimentation en énergie, logé dans une chaîne de guidage, ainsi qu'un canal de guidage conçu pour guider, en service, le mouvement de ladite chaîne de guidage d'énergie, **caractérisé par le fait qu'**au moins un tronçon respectif de la chaîne (4) de guidage d'énergie et du canal de guidage (3) sont préassemblés à l'écart du site d'utilisation du système à chaîne de guidage d'énergie ; un ensemble unitaire commun de transport (1) est, en outre, constitué par intégration du tronçon de la chaîne (4) de guidage d'énergie dans le tronçon du canal de guidage (3) ; lors de la formation dudit ensemble unitaire commun de transport (1), le tronçon du canal de guidage (3) est inséré dans un châssis d'encadrement (2) conjointement au tronçon de la chaîne (4) de guidage d'énergie qui y est intégré ; ledit ensemble unitaire commun de transport (1) est acheminé, comme un tout, vers le site d'utilisation du système à chaîne de guidage d'énergie ; au stade du montage définitif sur le site d'utilisation, le tronçon du canal de guidage (3) est déposé et fixé, conjointement au tronçon de la chaîne (4) de guidage d'énergie qui y est intégré, sur un ensemble de support destiné à porter, en service, ledit système à chaîne de guidage d'énergie ; et, au stade du montage définitif sur le site d'utilisation, ledit tronçon du canal de guidage (3) est déposé sur ledit ensemble de support, dans le châssis d'encadrement (2), puis ledit châssis d'encadrement (2) est enlevé.

2. Procédé selon la revendication 1, **caractérisé par le fait que**, lors de la formation de l'ensemble unitaire commun de transport (1), le tronçon du canal de guidage (3) est fixé au châssis d'encadrement (2) par l'intermédiaire d'un verrouillage de transport (7) ; et cette fixation est dissociée lors du montage définitif, après la fixation dudit tronçon dudit canal de guidage (3) à l'ensemble de support.

3. Procédé selon la revendication 1 ou 2, **caractérisé par le fait que**, en vue de l'insertion dans le châssis d'encadrement (2), le tronçon du canal de guidage (3) est tout d'abord déposé, conjointement au tronçon de la chaîne (4) de guidage d'énergie qui y est intégré, sur une partie inférieure (2E) dudit châssis d'encadrement (2) ; **par le fait qu'**une partie supérieure (2A, 2B, 2C, 2D, 2F, 2G) dudit châssis d'encadrement (2) est ensuite amenée à un emplacement sus-jacent à ladite partie inférieure (2E), et auquel les deux parties du châssis d'encadrement (2) ceinturent associativement le tronçon du canal de guidage (3) et le tronçon de la chaîne (4) de guidage d'énergie ; et **par le fait que** lesdites deux parties dudit châssis d'encadrement (2) sont reliées l'une à l'autre dans l'enchaînement direct.

4. Procédé selon la revendication 1 ou 2, **caractérisé par le fait que**, en vue de l'insertion dans le châssis d'encadrement (2), le tronçon du canal de guidage (3) est tout d'abord déposé sur un support, conjointement au tronçon de la chaîne (4) de guidage d'énergie qui y est intégré ; **par le fait qu'**une partie supérieure (2A, 2B, 2C, 2D, 2F, 2G) dudit châssis d'encadrement (2) est ensuite amenée à un emplacement sus-jacent audit tronçon du canal de guidage (3), et auquel sa partie supérieure (2A, 2B, 2C, 2D, 2F, 2G) ceinture ledit tronçon du canal de guidage (3) et le tronçon de la chaîne (4) de guidage d'énergie, à l'exception de la face inférieure ; et **par le fait qu'**une partie inférieure (2E) dudit châssis d'encadrement (2) est amenée, dans l'enchaînement direct, à un emplacement sous-jacent audit tronçon dudit canal de guidage (3), et auquel elle est fixée à ladite partie supérieure (2A, 2B, 2C, 2D, 2F, 2G).

5. Procédé selon la revendication 1 ou 2, **caractérisé par le fait que**, en vue de l'insertion dans le châssis d'encadrement (2), le tronçon du canal de guidage (3) est tout d'abord déposé sur un support, conjointement au tronçon de la chaîne (4) de guidage d'énergie qui y est intégré ; **par le fait que** ledit châssis d'encadrement (2), comprenant une partie supérieure (2A, 2B, 2C, 2D, 2F, 2G) et une partie inférieure (2E) reliée à cette dernière avec faculté de pivotement, est ensuite amené, dans une condition dans laquelle ladite partie inférieure (2E) a pivoté à l'écart de la face inférieure de ladite partie supérieure (2A, 2B, 2C, 2D, 2F, 2G), à un emplacement sus-jacent audit tronçon du canal de guidage (3) et audit tronçon de la chaîne (4) de guidage d'énergie, et auquel sa partie supérieure (2A, 2B, 2C, 2D, 2F, 2G) ceinture ledit tronçon dudit canal de guidage (3) et ledit tronçon de ladite chaîne (4) de guidage d'énergie, à l'exception de la face inférieure ; et **par le fait que**, dans l'enchaînement direct, ladite partie inférieure (2E) est animée d'un pivotement jusque sous ledit canal de guidage (3), et est consignée à demeure dans cette position.

6. Procédé selon l'une des revendications 3 à 5, **caractérisé par le fait que**, lors du montage définitif, la liaison entre la partie supérieure (2A, 2B, 2C, 2D, 2F, 2G) du châssis d'encadrement, et la partie inférieure (2E) de ce dernier, est totalement dissociée en vue de l'enlèvement dudit châssis d'encadrement (2) ; et **par le fait que** ladite partie supérieure (2A, 2B, 2C, 2D, 2F, 2G) est soulevée à l'écart du canal de guidage (3) distinctement de ladite partie inférieure (2E).

7. Procédé selon l'une des revendications 3 à 5, **caractérisé par le fait que**, lors du montage définitif, en vue de l'enlèvement du châssis d'encadrement (2), la liaison entre la partie supérieure (2A, 2B, 2C, 2D, 2F, 2G), et la partie inférieure (2E) de ce dernier, est desserrée et/ou la consignation à demeure de la position de ladite partie inférieure (2E) est neutralisée ; **par le fait que** ladite partie inférieure (2E) est animée d'un pivotement l'éloignant de la face inférieure du canal de guidage (3) ; et **par le fait que** ledit châssis d'encadrement (2) est soulevé à l'écart dudit canal de guidage (3) lorsque ladite partie inférieure (2E) occupe l'emplacement éloigné par pivotement.

8. Procédé selon l'une des revendications 1 à 7, **caractérisé par le fait que** plusieurs ensembles unitaires communs de transport (1), comprenant des châssis d'encadrement (2) et des tronçons de canaux de guidage (3) et de chaînes (4) de guidage d'énergie intégrés dans lesdits châssis, sont empilés verticalement les uns sur les autres avant, pendant ou après l'acheminement depuis le site du préassemblage jusqu'au site d'utilisation.

9. Procédé selon l'une des revendications 1 à 8, **caractérisé par le fait que** le tronçon du canal de guidage (3), et/ou de la chaîne (4) de guidage d'énergie, englobe respectivement toute la longueur de ce dernier/cette dernière.

10. Procédé selon l'une des revendications 1 à 8, **caractérisé par le fait que**, au stade du préassemblage, plusieurs ensembles unitaires communs de transport (1), comprenant respectivement des tronçons du canal de guidage (3) et/ou de la chaîne (4) de guidage d'énergie, sont formés en concordance avec la longueur totale du système à chaîne de guidage d'énergie ; et **par le fait que** ces tronçons sont montés, sur le site d'utilisation, avec rattachement les uns aux autres dans la direction longitudinale.

11. Procédé selon la revendication 10, **caractérisé par** la formation d'un ensemble unitaire de transport (1) comprenant un tronçon du canal de guidage (3) et une chaîne complète (4) de guidage d'énergie, et de plusieurs ensembles unitaires de transport (1) comprenant uniquement des tronçons dudit canal de guidage (3) ; et ces tronçons sont montés, sur le site d'utilisation, avec rattachement les uns aux autres dans la direction longitudinale.

12. Dispositif pour la mise en oeuvre du procédé selon l'une des revendications 1 à 11, constitué d'un châssis d'encadrement (2) dont la forme et les dimensions sont adaptées à la forme et aux dimensions d'un canal de guidage (3) d'un système à chaîne de guidage d'énergie, et au rayon de courbure d'une chaîne associée (4) de guidage d'énergie, de façon telle qu'il puisse recevoir au moins un tronçon dudit canal de guidage (3) et un tronçon de ladite chaîne associée (4) de guidage d'énergie, qui y est intégré et rabattu ; et puisse porter lesdits tronçons de manière sûre pour tous les types de mouvements de transport, à l'exception de rotations autour d'axes horizontaux.

13. Dispositif selon la revendication 12, **caractérisé par le fait que** la forme et les dimensions du châssis d'encadrement (2) sont adaptées aux emplacements et aux dimensions d'éléments de fixation (3B) implantés le long du tronçon du canal de guidage (3), en vue de fixer ledit tronçon dudit canal de guidage (3) à un ensemble de support, sur un site d'utilisation du système à chaîne de guidage d'énergie, de façon telle que lesdits éléments de fixation (3C) puissent être employés, en tant que tels, alors même que ledit tronçon dudit canal de guidage (3) est reçu par ledit châssis d'encadrement (2).

14. Dispositif selon la revendication 12 ou 13, **caractérisé par le fait que** le châssis d'encadrement (2) présente des verrouillages de transport (7) en vue de la consignation à demeure du canal de guidage (3) dans la direction longitudinale.

15. Dispositif selon l'une des revendications 12 à 14, **caractérisé par le fait que** le châssis d'encadrement (2) se compose d'une partie supérieure tridimensionnelle (2A, 2B, 2C, 2D, 2F, 2G) et d'une partie inférieure aplatie (2E) pouvant être reliée à cette dernière de manière réversible, ou bien reliée à cette dernière avec facultés de pivotement et de consignation à demeure.

16. Dispositif selon la revendication 15, **caractérisé par le fait que** la partie inférieure aplatie (2E) est constituée d'une multiplicité de supports transversaux horizontaux (2E) individuels.

17. Dispositif selon la revendication 16, **caractérisé par le fait que** la partie supérieure (2A, 2B, 2C, 2D, 2F, 2G) comprend au moins une multiplicité de supports longitudinaux (2A) et supports transversaux (2F, 2G) horizontaux, ainsi que de supports verticaux (2C), reliés les uns aux autres ; et **par le fait que** les supports transversaux horizontaux (2E) matérialisant la partie inférieure aplatie (2E) peuvent être respectivement reliés à des supports verticaux (2C), ou sont reliés à ces derniers avec facultés de pivotement et de consignation à demeure.

18. Dispositif selon l'une des revendications 12 à 17, **caractérisé par le fait que** le châssis d'encadrement (2) présente des éléments (8, 9) qui, lors d'un empilement de deux châssis d'encadrement (2), viennent en prise mutuelle et bloquent la position que lesdits châssis d'encadrement (2), superposés, occupent l'un par rapport à l'autre.

19. Dispositif selon l'une des revendications 12 à 18, **caractérisé par** la présence, sur des supports longitudinaux horizontaux supérieurs (2A) du châssis d'encadrement (2), d'une multiplicité respective de pattes de levage (8) qui se succèdent dans la direction longitudinale et dans lesquelles peuvent être accrochés des crochets d'engins de levage, le nombre desdites pattes de levage (8) étant supérieur au nombre nécessité par le soulèvement, ce qui confère, au stade du levage, une possibilité de sélection des points d'accrochage desdits crochets.

20. Dispositif selon les revendications 18 et 19, **caractérisé par le fait qu'**au moins quelques-unes des pattes de levage (8) remplissent, simultanément, la fonction d'éléments (8) de blocage de la position de châssis d'encadrement (2) mutuellement empilés.
